# EUROPEAN PATENT SPECIFICATION

(11) **EP 3 979 577 B1**
(45) Date of publication and mention of the grant of the patent: **27.03.2024**
(21) Application number: 20818084.4
(22) Date of filing: 26.05.2020
(51) Int. Cl.: H04L 47/30, H04L 47/52

(54) **QUEUE CONGESTION CONTROL METHOD, DEVICE AND STORAGE MEDIUM**
WARTESCHLANGENÜBERLASTUNGSTEUERUNGSVERFAHREN, VORRICHTUNG UND SPEICHERMEDIUM
PROCÉDÉ DE COMMANDE DE CONGESTION DE FILE D'ATTENTE, DISPOSITIF ET SUPPORT D'INFORMATIONS

(30) Priority: 05.06.2019 CN 201910485628
(43) Date of publication of application: 06.04.2022
(73) Proprietor: ZTE Corporation, Shenzhen, Guangdong 518057 (CN)
(72) Inventor: WANG, Tongle, Shenzhen, Guangdong 518057 (CN); ZHENG, Yan, Shenzhen, Guangdong 518057 (CN)
(74) Representative: Gevers Patents
(86) International application number: PCT/CN2020/092343
(87) International publication number: WO 2020/244422

(56) References cited:
- WO-A1-2012/130264
- CN-A- 108 243 116

## Description

### TECHNICAL FIELD

The present disclosure relates to the field of communication technology, and in particular to a queue congestion control method, a device and a storage medium.

### BACKGROUND

Data center online intensive services, deep learning, high-frequency trading and other applications require support of lossless network technology, while conventional IP (Internet Protocol Address)/Ethernet networks are lossy networks. In the lossy networks, packets are often discarded when a local congestion occurs. A packet loss leads to a retransmission and ultimately to a decrease in network throughput. Therefore, the lossy networks are unable to meet business needs of modern data centers.

EP3547627A1 provides a flow control method and switching device. The flow control method, including: when congestion is detected, determining, by a first switching device, a key flow from a plurality of data flows; generating a back pressure message including a flow attribute value of the key flow; sending the back pressure message to an upstream device of the key flow; and pausing, by the upstream device of the key flow, sending of the key flow, where the back pressure message has no impact on sending of another data flow other than the key flow by the upstream device of the key flow. The present invention further provides a switching device that can implement the flow control method. According to the present invention, congestion can be effectively alleviated, packet loss can be avoided, and congestion diffusion can be effectively controlled, thereby improving network data exchange performance.

WO2012/130264A1 provides a user traffic accountability under congestion in flow-based multilayer switches. A method of policing network traffic based on congestion on a flow-based programmable switch, such as an OpenFlow switch is provided. The method polices congestion - causing flows in a network by detecting congestion (330) at a flow-based programmable switch (300) on the network. Once congestion has been detected, the method identifies one or more flows that are causing the congestion at the flow-based programmable switch (300), and penalizes the flows that were identified as causing congestion. A flow-based programmable switch (300) including a data plane (302) having input ports (304), output ports, and forwarding rules (308) that map packets received on an input port (304) to an output port based on a packet matching a rule in the forwarding rules (308) is also described. The flow-based programmable switch (300) includes a congestion detection module (330) that receives statistics from the data plane (302) and is configured to detect congestion at the flow-based programmable switch (300), a traffic/flow extractor module (340) that receives statistics and/or packets from the data plane (302) and is configured to identify a flow that is causing congestion at the flow-based programmable switch (300) when congestion has been detected, and a policing module (350) that receives information on the flow that is causing congestion from the traffic/flow extractor module (340) and is configured to penalize the flow that has been identified as causing congestion at the flow-based programmable switch (300).

### SUMMARY

In one aspect, the present disclosure provides a queue congestion control method which is defined by claim 1.

In another aspect, the present disclosure provides a communication device which is defined by claim 10.

In yet another aspect, the present disclosure provides a computer-readable storage medium which is defined by claim 11.

Further advantageous embodiments of the present disclosure are indicated in the dependent claims.

### BRIEF DESCRIPTION OF THE DRAWINGS

FIG. 1 is a flowchart of a queue congestion control method according to a first embodiment of the present disclosure.
FIG. 2 is a schematic structural diagram of a flow management control module according to the first embodiment of the present disclosure.
FIG. 3 is a flowchart of configuring a statistical flow according to the first embodiment of the present disclosure.
FIG. 4 is a schematic structural diagram of a flow table according to the first embodiment of the present disclosure.
FIG. 5 is a control diagram of performing back pressure of a congested flow accurately in advance according to the first embodiment of the present disclosure.
FIG. 6 is a control diagram of discovering a congested queue and copying data according to a second embodiment, not covered by the current invention.
FIG. 7 is a control diagram of discovering a congested queue and sampling and copying data according to the second embodiment, not covered by the current invention.
FIG. 8 is a control diagram of identifying an isolated statistical flow by quantitative and byte statistics according to the second embodiment, not covered by the current invention.
FIG. 9 is a control diagram of identifying an isolated statistical flow by timing and byte statistics according to the second embodiment, not covered by the current invention.
FIG. 10 is a control diagram of an explicit congestion notification (ECN) mark according to the second embodiment, not covered by the current invention.
FIG. 11 is a schematic structural diagram of an input port and an output port according to the second embodiment, not covered by the current invention.
FIG. 12 is a schematic structural diagram of a queue congestion control apparatus according to a third embodiment of the present disclosure.
FIG. 13 is a schematic structural diagram of a communication device according to the third embodiment of the present disclosure.
FIG. 14 is a schematic structural diagram of a base station according to the third embodiment of the present disclosure.

### DETAILED DESCRIPTION

In order to make the purpose, the technical solution, and the advantages of the present disclosure clearer, the present disclosure will be described in detail through specific embodiments with reference to the accompanying drawings. It should be understood that the specific embodiments described here are only used to explain the present disclosure, and are not used to limit the present disclosure.

The inventors noticed that: priority-based flow control (PFC) IEEE 802.1Qbb is currently a technology commonly used in network devices that construct a lossless Ethernet. However, PFC technology also has shortcomings. First of all, PFC is a flow control technology based on input queues. PFC flow control may cause all flows of the same priority at an input port of a device to be blocked at the same time, which then causes a congestion of packets forwarded to other non-congested egresses, resulting in a head of the line blocking (HOLB), and even a congestion spreading, leading to a forwarding delay and packet loss. Secondly, for scenarios where the input queue does not exceed a PFC flow control threshold, but the output queue is congested and is about to lose packets, it is impossible to directly use a ingress PFC flow control technology to perform back pressure to an upstream device port. It may be seen that for a scenario of output queue congestion, a requirement of lossless network without packet loss may not be met by only relying on PFC technology. A congestion isolation technology has emerged to address the above problems. However, the current congestion isolation technology is to randomly select packets in a congested queue as a congested flow, and then isolate and manage the congested flow. The congestion flow selected by this management control method has low accuracy and poor congestion control effect, especially when there are multiple flows in the congested queue.

### First embodiment

In view of the current congestion isolation technology randomly selecting data packets of a congested queue as a congested flow for isolation management with low accuracy rate and poor congestion control effect, in this embodiment, an isolated statistical flow is selected according to data packet statistical information obtained by counting data packets corresponding to the congested queue. Compared with the current random selection method, the method in this embodiment has better accuracy and better congestion control effect.

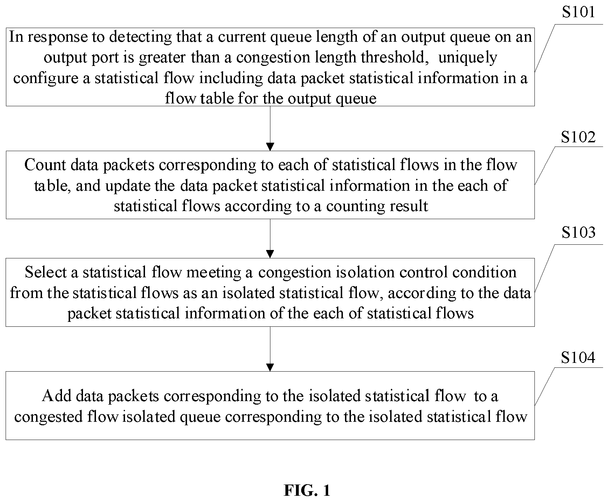

For ease of understanding, this embodiment is described below with reference to a queue congestion control method shown in FIG. 1 as an example, including the following operations.

In S101, in response to detecting that a current queue length of an output queue on an output port is greater than a congestion length threshold, a statistical flow including data packet statistical information is uniquely configured in a flow table for the output queue.

In S 102, data packets corresponding to each of statistical flows in the flow table are counted, and the data packet statistical information of each of statistical flows is updated according to a counting result.

In S 103, a statistical flow meeting a congestion isolation control condition is selected from the statistical flows as an isolated statistical flow according to the data packet statistical information of each of statistical flows.

In S104, data packets corresponding to the isolated statistical flow are added to a congested flow isolated queue corresponding to the isolated statistical flow.

The queue congestion control method in this embodiment is applicable but not limited to a communication device using an output queue (OQ) or a virtual output queue (VOQ). The output port in S101 is an output port of the communication device.

In an example of this embodiment, the communication device may include a flow management control module (also referred to as a forwarding and flow management unit) and a congestion management control module (also referred to as a congestion flow identification and management unit). The flow management control module is mainly used for data packet forwarding and flow control related functions; the congestion management control module is mainly used for identification and management of the isolated statistical flow (that is, the congested flow). Moreover, in this embodiment, a location and a form of the flow management control module and the congestion management control module installed inside the device may be flexibly set according to requirements. For example, the flow management control module may be integrated inside a forwarding chip, or exist as an independent physical unit, and may exist in a form of hardware or software. The congestion management control module may also be integrated inside a chip or exist as the independent physical unit, and may exist in the form of hardware or software, or a combination of software and hardware.

In an example of this embodiment, the flow management control module may include a flow management component and an output queue component. A location and a form of the flow management component and the output queue component in this embodiment may also be set flexibly. For example, the flow management component and the output queue component may be integrated inside the forwarding chip, or may exist as the independent physical unit and may also exist in the form of hardware or software.

It should be understood that this embodiment does not limit names of the above-mentioned functional units and components in the communication device. This embodiment only uses the above-mentioned names for explanation. In fact, modules with corresponding functions are protected by this embodiment regardless of whether the modules are named the same.

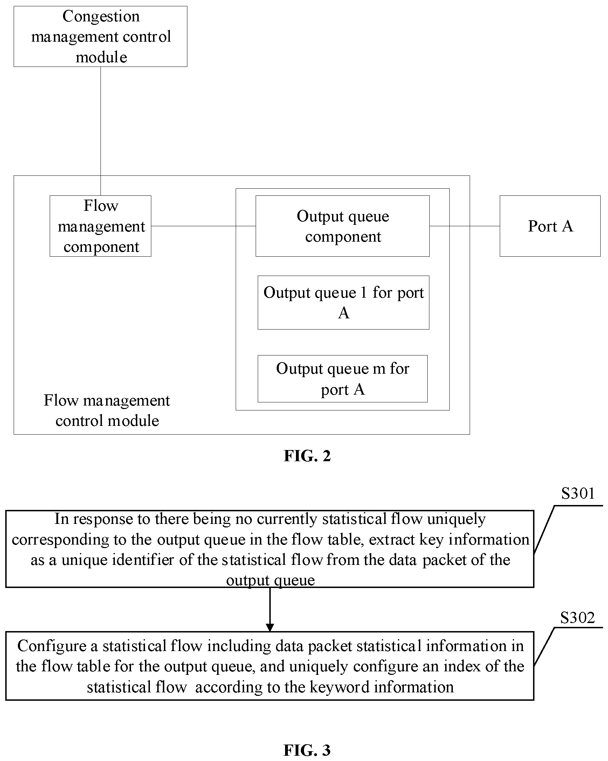

In an example of this embodiment, in S101, each output queue on the output port may be monitored by, but not limited to, the flow management control module to determine whether there is the congested queue. After the congested queue is detected, the congestion management control module is notified. For example, as shown in FIG. 2, there may be one output queue or multiple output queues on a port A (the output port) of the communication device. In some examples, the output queues may be divided according to priorities of data packets correspondingly. That is, the priorities of the data packets corresponding to the each output queue may be different. Alternatively, the output queues may also be divided from other dimensions.

In this example, when a data packet to be sent to port A is received, a destination output port of the data packet has been determined by routing and forwarding or other methods before the data packet is delivered to the flow management component. A method for determining the destination output port will not be repeated here. In addition, it should be understood that the output port and an input port in this embodiment are two relative concepts. For example, a certain port is the output port of the certain port's upstream port and the input port of the certain port's downstream port.

In this example, the flow management component may extract a packet descriptor of the data packet, and determine the priority of the data packet according to information in the packet descriptor, thereby determining the data packet corresponds to which output queue on the port A. And in this embodiment, the flow management component (but not limited to) may be used to determine whether there is a congested queue in output queues on port A, that is, whether there is an output queue with the current queue length greater than the congestion length threshold in the output queues. In this embodiment, the flow management component may perform the determination by periodically polling a length of each output queue on port A, or when a data packet corresponding to a certain output queue is received. For example, in an example of this embodiment, after receiving a data packet corresponding to a certain target output queue on port A, the flow management component may first determine whether a current queue length of the target output queue exceeds a preset congestion length threshold before adding the data packet to the target output queue. In response to the current length of the target output queue not exceeding the congestion length threshold, a descriptor of the data packet enters the target output queue normally, and the data packet is forwarded out from the port A after being scheduled.

In response to the current length of the target output queue exceeding the congestion length threshold, the descriptor of the data packet enters the target output queue of port A normally, and the data packet is forwarded out from port A after being scheduled. At the same time, the flow management component may copy or sample one data packet and forward the data packet to the congestion management control module for the congestion management control module to count the data packets in the congested output queue.

In this embodiment, a flow table is set, and the flow table is configured to store statistical flows corresponding to each congested output queue. That is, in this embodiment, in response to determining that a certain output queue (e.g., an output queue m) on a certain output port (e.g., the port A) is the congested output queue, a statistical flow including the data packet statistical information is uniquely configured in the flow table for the output queue m. This statistical flow is configured to count the data packets corresponding to the output queue m. That is, a statistical flow in the flow table in this embodiment uniquely corresponds to an output queue of an output port.

In this embodiment, a process of uniquely configuring the statistical flow including the data packet statistical information in the flow table for the output queue is shown in FIG. 3, including the following operations.

In S301, in response to there being no statistical flow uniquely corresponding to the output queue in the flow table, keyword information as a unique identifier of the statistical flow is extracted from the data packet of the output queue.

The keyword information in this embodiment may include at least one of header information of the data packet and intermediate information of the data packet during forwarding process, as long as the statistical flow may be uniquely identified and the statistical flow may be uniquely bound to the output queue. For example, in some examples of this embodiment, the keyword information extracted from the data packet of the output queue may include, but is not limited to, a source IP, a destination IP, a source transmission port number (that is, a source layer 4 port number), and a destination transmission port number (that is, the source layer 4 port number) and a protocol type.

In S302, the statistical flow including data packet statistical information is configured in the flow table for the output queue, and an index of the statistical flow is uniquely configured according to the keyword information.

In this embodiment, when the index of the statistical flow is configured according to the keyword information, the index may be a single-tuple or a multi-tuple, and may be combined arbitrarily according to requirements. For example, in one embodiment, the index of the statistical flow may be directly set as the source IP, the destination IP, the source transmission port number, the destination transmission port number, and the protocol type. The index may also be set to a hash value obtained by hashing the source IP, the destination IP and the source transmission port number, the destination transmission port number and the protocol type. In this way, after receiving a copied data packet sent by the flow management control module, the congestion management control module determines which statistical flow the data packet corresponds to, according to the keyword information in the data packet, and then update the data packet statistical information in the statistical flow according to the data packet.

In this embodiment, in response to determining that an output queue on a certain port is the congested queue, the flow management control module may extract a queue number of the output queue and use the queue number as matching information to match subsequent data packets to be received by this port. When a data packet is matched to the output queue corresponding to the queue number, the data packet may be copied according to a preset copy rule and the copied data packet may be sent to the congestion management control module for statistical analysis. Herein, in an example, the copy rule may include but is not limited to any one of the following.

All data packets in the corresponding output queue of each statistical flow are copied, and copied data packets are counted.

The data packets of the corresponding output queue of each statistical flow are sampled and copied, and sampled and copied data packets are counted. A sampling rule in this embodiment may be a timing sampling. The data packets may be sampled according to a number of data packet intervals or sampled by using other sampling rules.

In this embodiment, in a case that the congestion management control module is a unit in the chip, when the flow management control module sends the data packet to the congestion management control module, the data packet may be sent through a predetermined processing flow in the chip, or the data packet may be directly sent to the congestion management control module through a hardware bus, where the hardware bus quickly connected to the congestion management control module is set in the chip. Alternatively, the data packet may also be sent to the congestion management control module through software implementation.

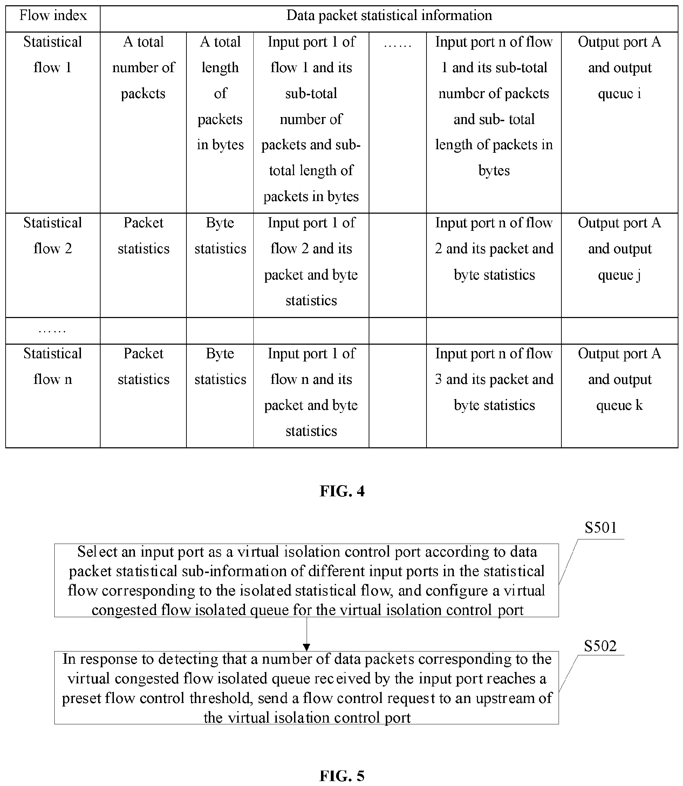

In this embodiment, FIG. 4 shows a schematic structure of the flow table. Each statistical flow includes a flow index and the data packet statistical information. The data packet statistical information includes at least one of a total number of packets and a total length of packets in bytes. In S102, the data packet statistical information in the statistical flow is updated according to the counting result includes the following operations.

In a case that the data packet statistical information includes the total number of packets, in response to receiving a data packet corresponding to the statistical flow, the total number of packets in the statistical flow is increased by 1.

In a case that the data packet statistical information includes the total length of packets in bytes, in response to receiving a data packet corresponding to the statistical flow, a byte length of a received data packet is obtained, and the byte length of the received data packet is added to the total length of packets in bytes in the statistical flow to obtain an updated total length of packets in bytes.

Through the flow table shown in FIG. 4, a statistical flow may be established respectively for each congested output queue of each output port, and data packet information of the data packets corresponding to each congested output queue (the data packets may include at least one of data packets that have entered the output queue and have not been sent out yet, and/or the data packets may include subsequent received data packets) is counted as a basis for subsequent judgment.

For example, in S103, methods of selecting the statistical flow meeting the congestion isolation control condition from the statistical flows as the isolated statistical flow according to the data packet statistical information of the each statistical flow, may include, but is not limited to, any of the following methods.

First method: The data packet statistical information includes the total number of packets, and the congestion isolation control condition includes a maximum total number of packets. In this case, a statistical flow with the maximum total number of packets in the statistical flows is selected as the isolated statistical flow.

Second method: The data packet statistical information includes the total length of packets in bytes, and the congestion isolation control condition includes a maximum total length of packets in bytes. In this case, a statistical flow with the maximum total length of packets in bytes in the statistical flows is selected as the isolated statistical flow.

Third method: The data packet statistical information includes the total number of packets and the total length of packets in bytes, and the congestion isolation control condition includes a maximum integrated value calculated by combining the total number of packets and the total length of packets in bytes. In this case, a statistical flow with the maximum integrated value in the statistical flows is selected as the isolated statistical flow.

Which one of the above example methods is used may be flexibly set according to requirements. And it should be understood that this embodiment is not limited to the three isolated statistical flow determination (identification) methods described above.

In this embodiment, when using any one of the three methods described above to identify the isolated statistical flow, a quantitative statistical identification method or a timing statistical identification method may be used.

When using the quantitative statistical identification method, before selecting the statistical flow meeting the congestion isolation control condition from the statistical flows as the isolated statistical flow according to the data packet statistical information of the each statistical flow, the method also includes: determining whether a total number of data packets currently counted is greater than or equal to a preset threshold for a total number of data packets. In response to the total number of data packets currently counted being greater than or equal to the preset threshold for the total number of data packets, the statistical flow meeting the congestion isolation control condition is selected from the statistical flows as the isolated statistical flow according to the data packet statistical information of the each statistical flow. The preset threshold for the total number of data packets in this embodiment may be set flexibly according to application scenarios, for example, may be set to 1000, 2000, etc.

When using the timing statistical identification method, before selecting the statistical flow meeting the congestion isolation control conditions from the statistical flows as the isolated statistical flow according to the data packet statistical information of the each statistical flow, the method also includes: determining whether a current timing value is greater than or equal to a preset time interval value. In response to the current timing value being greater than or equal to the preset time interval value, the statistical flow meeting the congestion isolation control condition is selected from the statistical flows as the isolated statistical flow according to the data packet statistical information of the each statistical flow. The preset time interval value in this embodiment may also be flexibly set according to the application scenarios, for example, may be set to 10 minutes, 20 minutes, etc.

In this example, after selecting the statistical flow meeting the congestion isolation control condition from the statistical flows as the isolated statistical flow, the method may also include, but is not limited to: clearing the each statistical flow, or clearing the data packet statistical information of the each statistical flow. Alternatively, in other examples of this embodiment, the each statistical flow or the data packet statistical information in the flow table may not be cleared.

In this embodiment, after the isolated statistical flow is identified through the above process, the isolated statistical flow may be sent to the flow management control module for isolation management. In this embodiment, the isolation management performed by the flow management control module may include, but is not limited to, a process of marking a congestion notification and performing back pressure for the congested flow accurately in advance.

Herein, an example process of marking the congestion notification may use but is not limited to any of the following two marking methods.

First marking method: This process includes marking the data packet with the congestion notification when adding the data packet to the congested flow isolated queue, where the data packet corresponds to the isolated statistical flow and the isolated statistical flow corresponds to the congested flow isolated queue. The congestion notification mark may be, but not limited to, an explicit congestion notification (ECN) mark.

Second marking method: After adding the data packet corresponding to the isolated statistical flow to the congested flow isolated queue corresponding to the isolated statistical flow, when the data packet in the congested flow isolated queue is called out, the data packet is marked with the congestion notification.

In an example of this embodiment, the data packet statistical information of the statistical flow may also include data packet statistical sub-information corresponding to different input ports. After the statistical flow meeting the congestion isolation control condition is selected from the statistical flows as the isolated statistical flow, a process of performing back pressure for the congested flow accurately in advance is performed. As shown in FIG. 5, the process includes the following operations.

In S501, at least one input port is selected as a virtual isolation control port according to data packet statistical sub-information in the statistical flow corresponding to the isolated statistical flow of different input ports, and a virtual congested flow isolated queue is configured for the virtual isolation control port.

In S502, in response to detecting that a number of data packets corresponding to the virtual congested flow isolated queue received by the input port reaches a preset flow control threshold, a flow control request is sent to an upstream of the virtual isolation control port. The flow control request may be but not limited to a priority-based flow control (PFC) request. In this way, during a period that the output queue has been congested and the input queue has not been congested, an input port that may be congested may still be predicted, and a congested flow isolation and a PFC back pressure may be performed accurately in advance for input ports causing congestion, to avoid packet losses and head-of-the-line-blocking inside the communication device.

In an example of this embodiment, referring to FIG. 4, the data packet statistical sub-information may include at least one of a sub-total number of packets and a sub-total length of packets in bytes corresponding to the input port. The sub-total number of packets is used to record a total number of data packets from the input port, and the sub-total length of packets in bytes is used to record a total byte length of data packets from the input port. In this example, an input port with a maximum sub-total number of packets or with a maximum sub-total length of packets in bytes, or with a maximum integrated value calculated by combining the sub-total number of packets and the sub-total length of packets in bytes is selected as the virtual isolation control port.

Optionally, in some examples of this embodiment, the following process for eliminating congested flow (that is, isolated statistical flow) control may also be included. In this example, after adding the data packet (that corresponds to the isolated statistical flow) to the congested flow isolated queue (that corresponds to the isolated statistical flow), the method also includes any one of the following operations.

In response to periodically detecting that a current queue length of the congested flow isolated queue is less than a first isolation release length threshold, which indicates that the congested flow is eliminated, the congested flow isolated queue is reclaimed.

In response to detecting that the current queue length of the congested flow isolated queue is less than a second isolation release length threshold within a continuous preset time period, which indicates that the congested flow is eliminated, the congested flow isolated queue is reclaimed.

Optionally, congested flow isolated queue resources may be reclaimed by, but not limited to, the flow management component, and corresponding statistical flow resources in the flow table may also be reclaimed. For example, the flow management component may notify the congestion management control module of a congested flow elimination message, and the notification message may carry but not limited to the output port of the congested flow and keyword information of the congested flow. After receiving the congested flow elimination notification corresponding to a certain output port, the congestion management control module reclaims the statistical flow resources corresponding to the output port, thereby realizing dynamic creation and reclaim of resources to improve the flexibility of resource utilization and resource utilization ratio.

### Second Embodiment, not covered by the current invention

In order to facilitate understanding, a process of a queue congestion control method is illustrated by examples in this embodiment on the basis of the above first embodiment.

For discovering a congested queue and copying data, this embodiment may include but not limited to the following two methods.

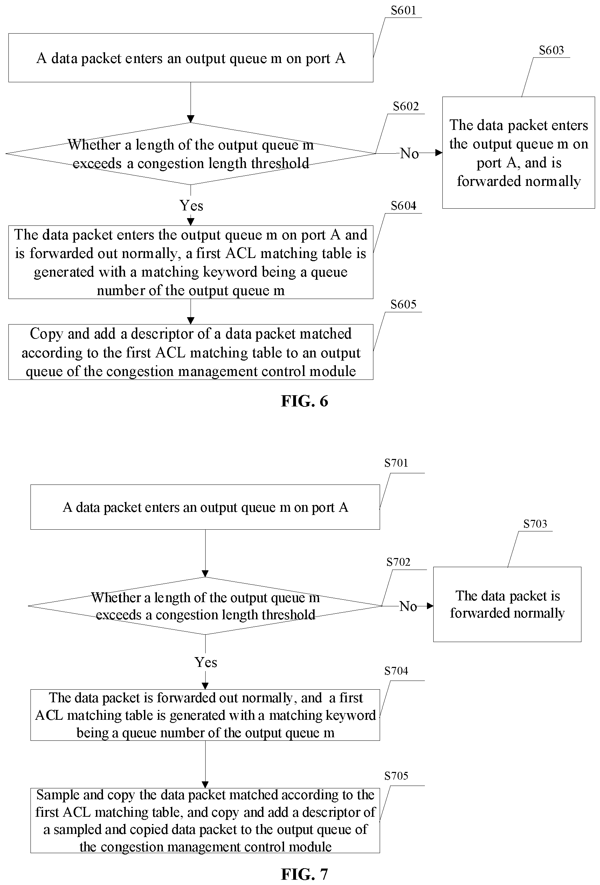

First method: As shown in FIG. 6, an access control list (ACL) is used to copy data packets of a congested output queue on an output port. This process includes the following operations.

In S601, a flow management component is in charge of the data packet entering an output queue m on a port A (the output port).

In S602, before the data packet enters the output queue m, the flow management component determines whether a length of the output queue m exceeds a preset congestion length threshold. In response to the length of the output queue m not exceeding the preset congestion length threshold, S603 is performed. In response to the length of the output queue m exceeding the preset congestion length threshold, S604 is performed.

In S603, in response to the length of the output queue m not exceeding the preset threshold, i.e., no congestion occurs in the output queue m, the data packet normally enters the output queue m on the port A, and the data packet is forwarded out from the port A after being scheduled.

In S604, in response to the length of the output queue m exceeding the congestion length threshold, i.e., the output queue m is congested, the data packet normally enters the output queue m on the port A and is forwarded out from port A. In addition, the flow management component may generate a first ACL matching table with a matching keyword being a queue number of the current congested output queue m, and copy all data packets corresponding to the output queue m to a congestion management control module.

In S605, a descriptor of a data packet matched according to the first ACL matching table is copied and added to an output queue of the congestion management control module (in this embodiment, the congestion management control module as a unit may also be provided with the output queue). The copied data packets stored in the output queue are scheduled to be sent to the congestion management control module, so that the congestion management control module may identify and manage subsequent isolated statistical flows (that is, congested flows).

Second method: As shown in FIG. 7, the access control list (ACL) is used to sample and copy the data packets of the congested output queue of the output port. The process includes the following operations.

In S701, the flow management component is in charge of the data packet entering the output queue m on the port A (the output port).

In S702, before the data packet enters the output queue m, the flow management component determines whether the length of the output queue m exceeds the preset congestion length threshold. In response to the length of the output queue m not exceeding the preset congestion length threshold, S703 is performed. In response to the length of the output queue m exceeding the set congestion length threshold, S704 is performed.

In S703, in response to the length of the output queue m not exceeding the preset threshold, i.e., no congestion occurs in the output queue m, the data packet normally enters the output queue m on the port A, and the data packet is forwarded out from the port A after being scheduled.

In S704, in response to the length of the output queue m exceeding the congestion length threshold, i.e., the output queue m is congested, the data packet normally enters the output queue m on the port A and is forwarded out from the port A. In addition, the flow management component may generate the first ACL matching table with the matching key being the queue number of the currently congested output queue m, and copy all the data packets corresponding to the output queue m to the congestion management control module.

In S705, the data packet matched according to the first ACL matching table is sampled and copied, and a descriptor of a sampled and copied data packet is copied and added to the output queue of the congestion management control module (in this embodiment, the congestion management control module as a unit may also be provided with the output queue). The copied data packets stored in the output queue are scheduled to be sent to the congestion management control module, so that the congestion management control module may identify and manage the subsequent isolated statistical flows (that is, the congested flows). In an example, a sampling template may be defined to set a sampling rate as well as a port number and an output queue of a destination output port corresponding to a sampled packet.

In this embodiment, the identification of the isolated statistical flows (that is, the congested flows) may also adopt but not limited to the following two identification methods.

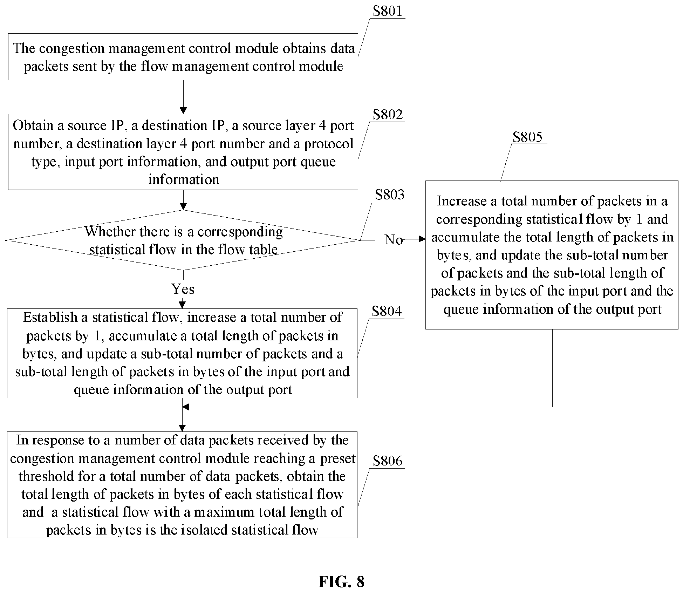

First method: A quantitative and byte statistics method is used to identify the isolated statistical flows. As shown in FIG. 8, the method includes the following operations.

In S801, the congestion management control module obtains data packets sent by a flow management control module.

In S802, each data packet is resolved, and five-tuple information of the data packet(including the source IP, the destination IP, the source layer 4 port number, the destination layer 4 port number and the protocol type), the input port information, and the output port queue information are obtained.

In S803, for each data packet, a hash calculation is performed according to the five-tuple information as input to obtain a hash value, and the hash value is used as an index of the statistical flow in the flow table, to determine whether there is a corresponding statistical flow in the flow table. In response to there being no corresponding statistical flow in the flow table, S804 is performed. In response to there being the corresponding statistical flow in the flow table, S805 is performed.

In S804, in response to this statistical flow not being established in the flow table, this statistical flow is established as a new flow in the flow table, a total number of packets is increased by one, a total length of packets in bytes is accumulated, and a sub-total number of packets and a sub-total length of packets in bytes of the input port and queue information of the output port are updated. A flow table format may be referred to FIG. 4.

In S805, in response to there being the statistical flow corresponding to the data packet, statistics of this data packet and a byte length of this data packet are accumulated on the basis of the data packet statistical information of this statistical flow, and the sub-total number of packets, the sub-total length of packets in bytes of the input port and the queue information of the output port are updated.

In S806, in response to a number of data packets received by the congestion management control module reaching a preset threshold for a total number of data packets, the total length of packets in bytes (or the total number of packets, or an integrated value of the total number of packets and the total length of packets in bytes) of each statistical flow is obtained; and a statistical flow with a maximum total length of packets in bytes serves as the isolated statistical flow.

The statistical flow may be cleared to perform a next cycle of identification process.

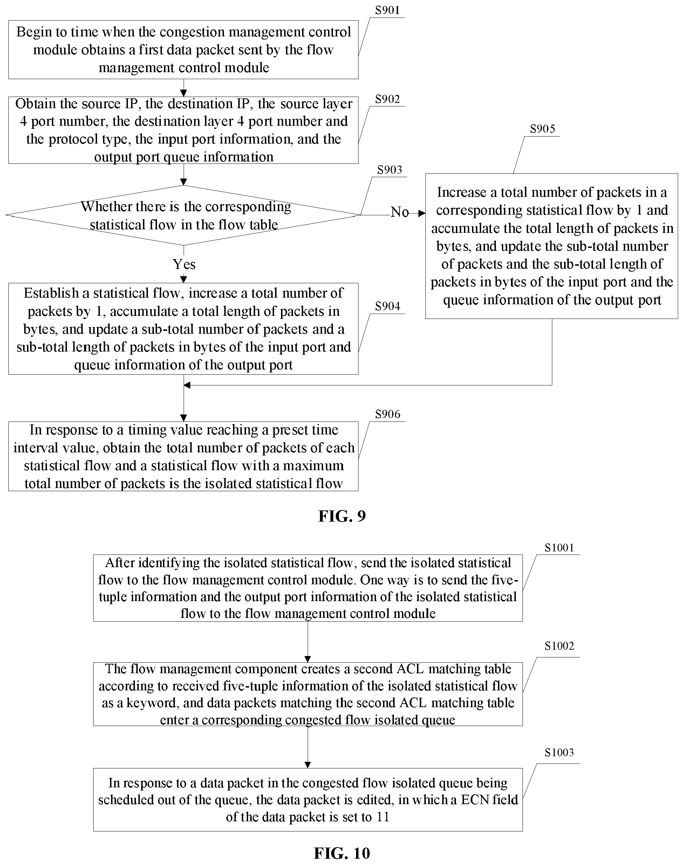

Second method: A method of timing and counting a total number of packets is used to identify the isolated statistical flows. As shown in FIG. 9, the method includes the following operations.

In S901, when the congestion management control module obtains a first data packet sent by the flow management control module, timing starts. The so-called first data packet refers to the first data packet for which a timer restarts timing.

In S902, each data packet is resolved, and the five-tuple information of the data packet (including the source IP, the destination IP, the source layer 4 port number, the destination layer 4 port number and the protocol type), the input port information, and the output port queue information are obtained.

In S903, for each data packet, the hash calculation is performed according to the five-tuple information as input to obtain the hash value, and the hash value is used as the index of the statistical flow in the flow table, to determine whether there is the corresponding statistical flow in the flow table. In response to there being no corresponding statistical flow in the flow table, S904 is performed. In response to there being corresponding flow, S905 is performed.

In S904, in response to this statistical flow not being established in the flow table, this statistical flow is established as a new flow in the flow table, the total number of packets is increased by 1, the total length of packets in bytes is accumulated, and the sub-total number of packets, the sub-total length of packets in bytes in the input port and the queue information of the output port are updated. A flow table format may be referred to FIG. 4.

In S905, in response to there being the statistical flow corresponding to the data packet, the statistics of the data packet and the byte length of the packet are accumulated on the basis of the data packet statistical information of this statistical flow, and the sub-total number of packets, the sub-total length of packets in bytes of the input port and the queue information of the output port are updated.

In S906, in response to a timing value reaching a preset time interval value, the total number of packets (or the total length of packets in bytes, or the integrated value of the total number of packets and the total length of packets in bytes) of each statistical flow is obtained; and a statistical flow with a maximum total number of packets serves as the isolated statistical flow.

The statistical flow may be cleared to perform a next cycle of identification process.

Optionally, a process of performing isolation management and ECN marking on the data packets corresponding to the isolated statistical flow is also included in this embodiment. As shown in FIG. 10, the process includes the following operations.

A current ECN marking function of the communication device is based on a packet marking of the congested queue. However, in this embodiment, the isolated statistical flow is isolated, and then the data packet may be determined and marked based on the congested flow isolated queue corresponding to the isolated statistical flow. Thus, the ECN marking for the isolated data packets is more accurate. As shown in FIG. 10, the process includes the following operations.

In S1001, after identifying the isolated statistical flow, the congestion management control module sends the isolated statistical flow to the flow management control module. One way is to send the five-tuple information and the output port information of the isolated statistical flow to the flow management control module.

In S1002, the flow management component of the flow management control module creates a second ACL matching table according to the received five-tuple information of the isolated statistical flow as a keyword, and data packets matching the second ACL matching table enter a corresponding congested flow isolated queue.

In S1003, in response to a data packet in the congested flow isolated queue being scheduled out of the queue, the data packet is edited, e.g., an ECN field of the data packet is set to 11.

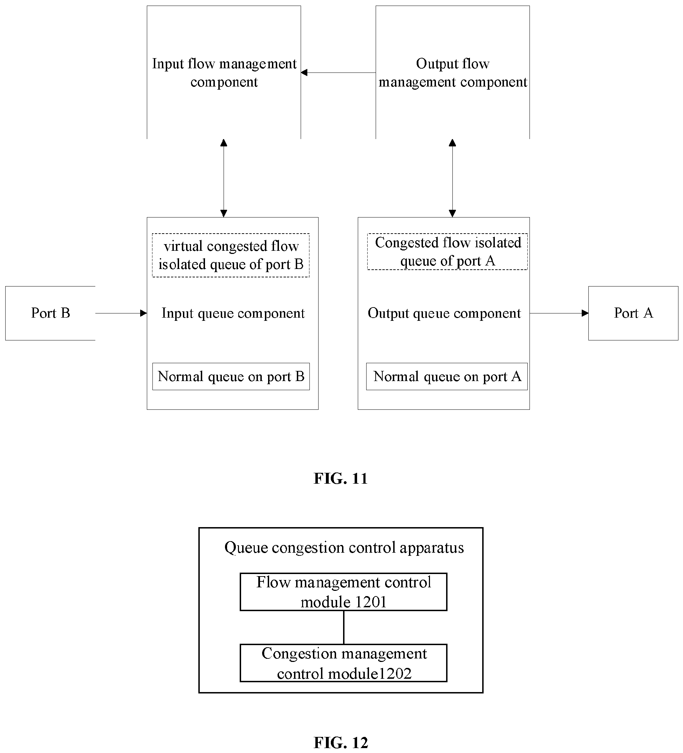

In this embodiment, the isolation of the isolated statistical flow and the flow control of the corresponding input port are described using the PFC function as an example. In an example, the PFC function of a network device may be implemented based on an input queue on the input port. This embodiment realizes the identification of the isolated statistical flow based on the output queue, and further determines all input ports of the isolated statistical flow based on input port information of the isolated statistical flow, sends an internal flow control message to notify the corresponding input port to adopt a PFC flow control of flow virtual isolation and virtual congested flow isolated queue. FIG. 11 shows an example of the isolation of the isolated statistical flow and a flow control notification from output to input of the communication device.

As shown in FIG. 11, the flow management component may include an output flow management component and an input flow management component. The output flow management component receives isolated statistical flow information (including the five-tuple information, an input port B with a largest sub-byte length, byte statistics, output port A information) issued by the congestion management control module.

The output flow management component creates an ACL rule based on using the five-tuple of the issued isolated statistical flow as a keyword, and packets matching this ACL rule enter an idle output congested flow isolated queue on the port A.

The output flow management component sends an internal flow control message to the input flow management component, and the flow control message carries information related to the isolated statistical flow (including the five-tuple information, information about the input port B with the maximum sub-total number of packets or the maximum sub-total length of packets in bytes).

The input flow management component receives the isolated statistical flow information sent by the output flow management component.

The input flow management component creates a third ACL matching table of the input port according to the five-tuple of the isolated statistical flow and the input port number as keywords. Data packets matching the third ACL matching table are counted into the corresponding virtual congested flow isolated queue on the input port B (in this embodiment, the data packets are only counted, and does not enter the virtual congested flow isolated queue, that is, no actual isolation is performed).

The input flow management component may choose to send the PFC flow control message of the isolated statistical flow queue to an upstream port according to configuration (for example, a number of data packets counted in the virtual congested flow isolated queue reaches a preset flow control number threshold). Before the queue on the output port A is congested and packets loss, the precise isolation of the input port and PFC flow control for the isolated statistical flow are realized in advance, which avoids output packet loss and head-of-line blocking.

### Third Embodiment

This embodiment provides a queue congestion control apparatus which may be set in a communication device. As shown in FIG. 12, the queue congestion control apparatus includes a congestion management control module 1202 and a flow management control module 1201.

The congestion management control module 1202 is configured to: (i) uniquely configure a statistical flow including data packet statistical information in a flow table for an output queue, in response to a current queue length of the output queue on an output port being greater than a congestion length threshold; (ii) count data packets corresponding to each of statistical flows in the flow table, and update the data packet statistical information in the each of statistical flows according to a counting result; (iii) select a statistical flow meeting a congestion isolation control condition from the statistical flows as an isolate statistical flow according to the data packet statistical information of each of the statistical flows. The specific execution process of the congestion management control module 1202 to implement the above functions and other functions that the congestion management control module 1202 may implement are shown in the foregoing embodiments, and will not be repeated here.

The flow management control module 1201 is configured to add data packets (that correspond to the isolated statistical flow) to an isolated queue of the isolated statistical flow (that corresponds to the isolated statistical flow). The specific execution process of the flow management control module 1201 to implement the above functions and other functions that the flow management control module 1201 may implement are shown in the foregoing embodiments, and will not be repeated here.

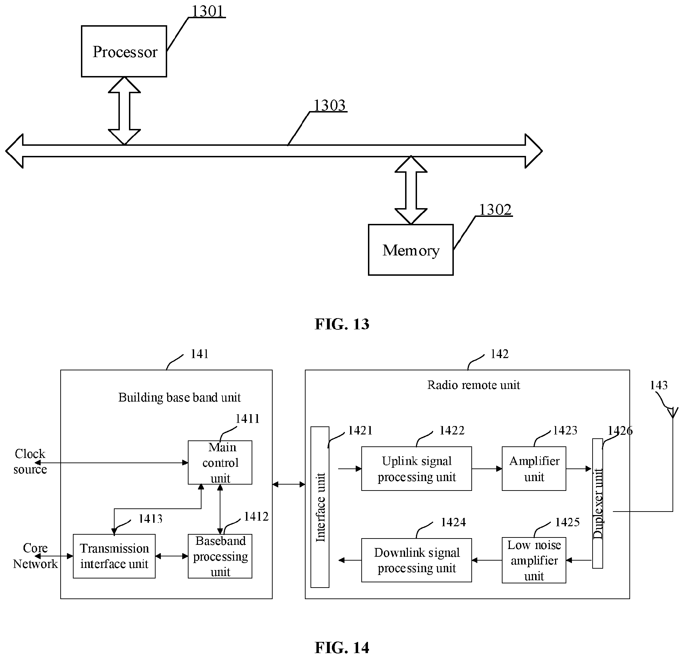

This embodiment also provides a communication device. The communication device may be various network devices in the network. As shown in FIG. 13, the communication device includes a processor 1301, a memory 1302, and a communication bus 1303.

The communication bus 1303 is configured to realize a communication connection between the processor 1301 and the memory 1302.

In an example, the processor 1301 may be configured to execute one or more computer programs stored in the memory 1302 to implement the operations of the queue congestion control method in the above embodiments.

For ease of understanding, an example of this embodiment uses a communication device as a base station for illustration. And it should be understood that the base station in this embodiment may be a cabinet-type macro base station, a distributed base station, or a multi-mode base station. As shown in FIG. 14, the base station in this example includes a building base band unit (BBU) 141, a radio remote unit (RRU) 142, and an antenna 143.

Herein, the building base band unit 141 is responsible for centralized control and management of the entire base station system, completing uplink and downlink baseband processing functions, and providing physical interfaces with radio frequency units and transmission networks to complete information exchange. As shown in FIG. 14, the building base band unit 141 may include a baseband processing unit 1412, a main control unit 1411, a transmission interface unit 1413, and the like according to different logic functions. Herein, the main control unit 1411 mainly implements building base band unit control management, signaling processing, data transmission, interactive control, system clock and other functions. The baseband processing unit 1412 is configured to complete baseband protocol processing such as signal encoding and modulation, resource scheduling, and data encapsulation, and provide an interface between the baseband unit and the radio remote unit. The transmission interface unit 1413 is responsible for providing the transmission interface connected to the core network. In this example, the above logical function units may be distributed on different physical boards or integrated on the same board. And optionally, the building base band unit 141 may adopt a baseband master control integrated type, or a baseband master control separated type. For the baseband master control integrated type, the master control, transmission, and baseband have an integrated design, that is, the baseband processing unit, the master control unit, and the transmission interface unit are integrated on one physical board. This architecture has higher reliability, lower time delay, higher resource sharing and scheduling efficiency, and lower power consumption. For the baseband master control separated type, the baseband processing unit and the master control unit are distributed on different boards, corresponding to a baseband board and a master control board respectively. The separated architecture supports free combination between boards and facilitates flexible expansion of the baseband. Specific settings may be flexibly adopted according to requirements.

The radio remote unit 142 communicates with the BBU through a baseband radio frequency interface to complete a conversion between a baseband signal and a radio frequency signal. Referring to FIG. 14, an exemplary radio remote unit 142 mainly includes an interface unit 1421, a downlink signal processing unit 1424, an uplink signal processing unit 1422, a power amplifier unit 1423, a low noise amplifier unit 1425, a duplexer unit 1426, etc., which constitute a downlink signal processing link and an uplink signal processing link. Herein, the interface unit 1421 provides a front haul interface with the baseband unit to receive and send baseband IQ signals. The downstream signal processing unit 1424 completes signal processing functions such as signal up-conversion, digital-to-analog conversion, and radio frequency modulation. The upstream signal processing unit 1422 mainly completes signal filtering, mixing, analog-to-digital conversion, down-conversion and other functions. The power amplifier unit 1423 is configured to amplify downlink signals and then sent out amplified downlink signals through the antenna 143, for example, to a terminal. The low noise amplifier unit 1425 is configured to amplify downlink signals received by the antenna 143 and then send amplified downlink signals to the downlink signal processing unit 1424 for processing. The duplexer unit 1426 supports multiplexing and filtering of transceiving signals.

In addition, it should be understood that the base station in this embodiment may also adopt a CU (Central Unit)-DU (Distributed Unit) architecture, where DU is a distributed access point, responsible for completing a underlying baseband protocol and a radio frequency processing function; CU is a central unit, responsible for processing a high-level protocol function and centralized management of multiple DUs. CU and DU jointly complete the baseband and radio frequency processing functions of the base station.

In this embodiment, the base station may also include a storage unit for storing various data. For example, the storage unit may store one or more computer programs, and the main control unit or the central unit may be used as a processor to call the one or more computer programs stored in the storage unit to implement the operations of the queue congestion control method in the above embodiments.

In this example, when the queue congestion control apparatus is installed in the base station, a function of at least one module of the queue congestion control apparatus may also be implemented by the main control unit or central unit.

This embodiment also provides a computer-readable storage medium which includes transitory or non-transitory, removable or non-removable medium used in any method or technology for storing information (such as computer-readable instructions, data structures, computer program modules, or other data). The computer-readable storage medium include but are not limited to a random access memory (RAM), a read-only memory (ROM), an electrically erasable programmable read only memory (EEPROM), a flash memory or other storage technologies, a compact disc read-only memory (CD-ROM), a digital versatile disk (DVD) or other optical disk storage, a magnetic cassette, a magnetic tape, a magnetic disk storage or other magnetic storage devices, or any other medium used to store desired information and that may be accessed by a computer.

In an example, the computer-readable storage medium in this embodiment may be used to store one or more computer programs, and the one or more computer programs may be executed by one or more processors to implement the operations of the queue congestion control method described in the above embodiments.

This embodiment also provides a computer program (or computer software), which may be distributed on a computer-readable medium and executed by a computable device to implement at least one operation of the queue congestion control method shown in the above embodiments. And in some cases, the at least one operation shown or described may be executed in a different order than that described in the above embodiments.

This embodiment also provides a computer program product, including a computer-readable apparatus, and the computer-readable apparatus stores the computer program as shown above. The computer-readable apparatus in this embodiment may include the computer-readable storage medium as shown above.

It may be seen that those skilled in the art should understand that all or some of the operations, system, functional modules/units of the device in the methods disclosed above may be implemented as software (which may be implemented by computer program code executable by a computing device), firmware, hardware, and appropriate combinations thereof. In a hardware implementation, the division between functional modules/units mentioned in the above description does not necessarily correspond to the division of physical components. For example, a physical component may have multiple functions, or a function or step may be performed by several physical components cooperatively. Some or all of the physical components may be implemented as software executed by a processor, such as a central processing unit, a digital signal processor or a microprocessor, or as hardware, or as an integrated circuit, such as an application specific integrated circuit.

In addition, as is well known to those of ordinary skill in the art, a communication medium usually includes a computer-readable instruction, a data structure, a computer program module, or other data in a modulated data signal such as carrier waves or other transmission mechanisms, and may include any information delivery medium. Therefore, the present disclosure is not limited to any specific combination of hardware and software.

The above content is a further detailed description of the embodiments of the present disclosure in combination with specific implementations, and it may not be considered that the specific implementations of the present disclosure are limited to these descriptions.

## Claims

1. A queue congestion control method, comprising:
in response to detecting that a current queue length of an output queue on an output port is greater than a congestion length threshold, uniquely configuring (S101) a statistical flow in a flow table for the output queue, wherein the statistical flow comprises data packet statistical information, and a statistical flow in the flow table corresponds to an output queue of an output port;
counting (S102) data packets corresponding to each of statistical flows in the flow table, and updating the data packet statistical information of each of the statistical flows according to a counting result;
selecting (S103) a statistical flow meeting a congestion isolation control condition from the statistical flows as an isolated statistical flow, according to the data packet statistical information of each of the statistical flows;
adding (S 104) data packets to a congested flow isolated queue, the data packets corresponding to the isolated statistical flow, and the congested flow isolated queue corresponding to the isolated statistical flow; wherein
in response to detecting that the current queue length of the output queue on the output port is greater than the congestion length threshold, uniquely configuring (S101) the statistical flow comprising the data packet statistical information in the flow table for the output queue comprises:
in response to detecting that the current queue length of the output queue on the output port is greater than the congestion length threshold and there being no statistical flow uniquely corresponding to the output queue in the flow table, extracting (S301) keyword information as a unique identifier of the statistical flow from a data packet of the output queue; and
configuring (S302) a statistical flow comprising the data packet statistical information in the flow table for the output queue, and uniquely configuring an index of the statistical flow according to the keyword information; and
updating the data packet statistical information of each of the statistical flows according to the counting result comprises:
determining a statistical flow corresponding to the data packet according to the keyword information in the data packet, and updating the data packet statistical information in the statistical flow corresponding to the data packet according to the data packet;
**characterized in that**,
the data packet statistical information comprises at least one of a total number of packets and a total length of packets in bytes; wherein the data packet statistical information comprises the total number of packets, and the congestion isolation control condition comprises a maximum total number of packets; or, the data packet statistical information comprises the total number of packets and the total length of packets in bytes, and the congestion isolation control condition comprises: a maximum integrated value obtained by combining the total number of packets and the total length of packets in bytes; and
before selecting the statistical flow meeting the congestion isolation control condition from the statistical flows as the isolated statistical flow, according to the data packet statistical information of each of the statistical flows, the method further comprises determining at least one of:
whether a total number of data packets currently counted is greater than or equal to a preset threshold for a total number of data packets;
whether a current timing value is greater than or equal to a preset time interval value.

2. The queue congestion control method according to claim 1, wherein the updating the data packet statistical information of each of the statistical flows according to the counting result comprises:
in a case that the data packet statistical information comprises the total number of packets, in response to receiving one data packet, increasing the total number of packets by 1;
in a case that the data packet statistical information comprises the total length of packets in bytes, in response to receiving one data packet, obtaining a byte length of the received data packet and adding the byte length of the received data packet to the total length of packets in bytes to obtain an updated total length of packets in bytes.

3. The queue congestion control method according to any one of claims 1 to 2, further comprising:
in response to adding the data packet corresponding to the isolated statistical flow to the congested flow isolated queue corresponding to the isolated statistical flow, marking the data packet with a congestion notification; or,
after adding the data packet corresponding to the isolated statistical flow to the congested flow isolated queue corresponding to the isolated statistical flow, in response to calling out the data packet in the congested flow isolated queue, marking the data packet with the congestion notification.

4. The queue congestion control method according to any one of claims 1 to 3, wherein the data packet statistical information comprises data packet statistical sub-information corresponding to different input ports; after selecting (S103) the statistical flow meeting the congestion isolation control condition from the statistical flows as the isolated statistical flow, the method further comprises:
selecting (S501) an input port from the different input ports as a virtual isolation control port, according to the data packet statistical sub-information of the statistical flow corresponding to the isolation statistical flow on the different input ports, and configuring a virtual congested flow isolated queue for the virtual isolation control port;
in response to detecting that a number of data packets corresponding to the virtual congested flow isolated queue received by the input port reaches a preset flow control threshold, sending (S502) a flow control request to an upstream of the virtual isolation control port.

5. The queue congestion control method according to claim 4, wherein the data packet statistical sub-information comprises at least one of a sub-total number of packets and a sub-total length of packets in bytes corresponding to the input port, the sub-total number of packets is configured to record a total number of data packets from the input port, and the sub-total length of packets in bytes is configured to record a total byte length of data packets from the input port.

6. The queue congestion control method according to any one of claims 1 to 5, wherein after adding the data packet corresponding to the isolated statistical flow to the congested flow isolated queue corresponding to the isolated statistical flow, the method further comprises any of:
in response to periodically detecting that a current queue length of the congested flow isolated queue is less than a first isolation release length threshold, reclaiming the congested flow isolated queue; and
in response to detecting that the current queue length of the congested flow isolated queue is less than a second isolation release length threshold within a preset time period, reclaiming the congested flow isolated queue.

7. The queue congestion control method according to any one of claims 1 to 6, wherein:
after selecting the statistical flow meeting the congestion isolation control condition from the statistical flows as the isolated statistical flow, the method further comprises: clearing the statistical flows, or clearing the data packet statistical information of the statistical flows.

8. The queue congestion control method according to any one of claims 1 to 7, wherein counting the data packets corresponding to each of the statistical flows in the flow table comprises any one of:
copying all data packets in a corresponding output queue of each of the statistical flows, and counting the copied data packets;
sampling and copying data packets in a corresponding output queue of each of the statistical flows, and counting the sampled and copied data packets.

9. The queue congestion control method according to claim 1, wherein the keyword information comprises: a source IP, a destination IP, a source transmission port number, a destination transmission port number and a protocol type.

10. A communication device, comprising a processor (1301), a memory (1302), and a communication bus (1303), wherein
the communication bus (1303) is configured to connect the processor (1301) and the memory (1302);
the processor (1301) is configured to execute a computer program stored in the memory (1302) to implement the queue congestion control method according to any one of claims 1 to 9.

11. A computer-readable storage medium, wherein the computer-readable storage medium stores one or more computer programs that, when executed by one or more processors, causes the one or more processors to implement the queue congestion control method according to any one of claims 1 to 9.

## Patentansprüche

1. Ein Warteschlangenüberlastungsteuerungsverfahren, umfassend:
als Antwort auf Erkennen, dass eine gegenwärtige Warteschlangenlänge einer Ausgabewarteschlange an einem Ausgabeport größer ist als ein Überlastungslängenschwellenwert, eindeutiges Konfigurieren (S101) einer statistischen Strömung in einer Strömungstabelle für die Ausgabewarteschlange, wobei die statistische Strömung statistische Datenpaketinformationen umfasst, und eine statistische Strömung in der Strömungstabelle einer Ausgabewarteschlange eines Ausgabeports entspricht;
Zählen (S102) von Datenpaketen, die jeder der statistischen Strömungen in der Strömungstabelle entsprechen, und Aktualisieren der statistischen Datenpaketinformationen jeder der statistischen Strömungen gemäß einem Zählungsergebnis;
Auswählen (S103) einer statistischen Strömung, die eine Überlastungsisolierungssteuerungsbedingung erfüllt, aus den statistischen Strömungen als eine isolierte statistische Strömung gemäß den statistischen Datenpaketinformationen jeder der statistischen Strömungen;
Hinzufügen (S104) von Datenpaketen zu einer überlasteten Strömung isolierten Warteschlange, wobei die Datenpakete der isolierten statistischen Strömung entsprechen und die überlastete Strömung isolierten Warteschlange der isolierten statistischen Strömung entspricht; wobei
als Antwort auf Erkennen, dass die gegenwärtige Warteschlangenlänge der Ausgabewarteschlange an dem Ausgabeport größer ist als der Überlastungslängenschwellenwert, eindeutiges Konfigurieren (S101) der statistischen Strömung, die statistische Datenpaketinformationen in der Strömungstabelle für die Ausgabewarteschlange umfasst, Folgendes umfasst:
als Antwort auf Erkennen, dass die gegenwärtige Warteschlangenlänge der Ausgabewarteschlange an dem Ausgabeport größer ist als der Überlastungslängenschwellenwert, und dass keine statistische Strömung vorhanden ist, die eindeutig der Ausgabewarteschlange in der Strömungstabelle entspricht, Extrahieren (S301) von Schlüsselwortinformationen als eine eindeutige Kennung der statistischen Strömung von einem Datenpaket der Ausgabewarteschlange; und
Konfigurieren (S302) einer statistischen Strömung, die die statistischen Datenpaketinformationen in der Strömungstabelle für die Ausgabewarteschlange umfasst, und eindeutiges Konfigurieren eines Indexes der statistischen Strömung gemäß den Schlüsselwortinformationen; und
wobei Aktualisieren der statistischen Datenpaketinformationen jeder der statistischen Strömungen gemäß dem Zählungsergebnis Folgendes umfasst:
Bestimmen einer statistischen Strömung, die dem Datenpaket entspricht, gemäß den Schlüsselwortinformationen in dem Datenpaket, und Aktualisieren der statistischen Datenpaketinformationen in der statistischen Strömung, die dem Datenpaket entspricht, gemäß dem Datenpaket;
**dadurch gekennzeichnet, dass**
die statistischen Datenpaketinformationen mindestens eines einer Gesamtanzahl von Paketen und einer Gesamtlänge von Paketen in Bytes umfassen; wobei die statistischen Datenpaketinformationen die Gesamtanzahl von Paketen umfassen und die Überlastungsisolierungssteuerungsbedingung eine maximale Gesamtanzahl von Paketen umfasst; oder die statistischen Datenpaketinformationen die Gesamtanzahl von Paketen und die Gesamtlänge von Paketen in Bytes umfassen und die Überlastungsisolierungssteuerungsbedingung Folgendes umfasst: einen maximalen Integralwert, erhalten durch Kombinieren der Gesamtanzahl von Paketen und der Gesamtlänge von Paketen in Bytes; und
vor Auswählen der statistischen Strömung, die die Überlastungsisolierungssteuerungsbedingung erfüllt, aus den statistischen Strömungen als die isolierte statistische Strömung gemäß den statistischen Datenpaketinformationen jeder der statistischen Strömungen, das Verfahren weiter Bestimmen von mindestens einem von Folgendem umfasst:
ob eine Gesamtanzahl von gegenwärtig gezählten Datenpaketen größer als oder gleich groß wie ein voreingestellter Schwellenwert für eine Gesamtanzahl von Datenpaketen ist;
ob ein gegenwärtiger Zeitwert größer oder gleich groß wie ein voreingestellter Zeitintervallwert ist.

2. Das Warteschlangenüberlastungsteuerungsverfahren nach Anspruch 1, wobei das Aktualisieren der statistischen Datenpaketinformationen jeder der statistischen Strömungen gemäß dem Zählungsergebnis Folgendes umfasst:
wenn die statistischen Datenpaketinformationen die Gesamtanzahl von Paketen umfassen, als Antwort auf Empfangen eines Datenpakets Erhöhen der Gesamtanzahl von Paketen um 1;
wenn die statistischen Datenpaketinformationen die Gesamtlänge von Paketen in Bytes umfassen, als Antwort auf Empfangen eines Datenpakets Erhalten einer Bytelänge des empfangenen Datenpakets und Hinzufügen der Bytelänge des empfangenen Datenpakets zu der Gesamtlänge von Paketen in Bytes, um eine aktualisierte Gesamtlänge von Paketen in Bytes zu erhalten.

3. Das Warteschlangenüberlastungsteuerungsverfahren nach einem der Ansprüche 1 bis 2, weiter umfassend:
als Antwort auf Hinzufügen des Datenpakets, das der isolierten statistischen Strömung entspricht, zu der überlasteten Strömung isolierten Warteschlange, die der isolierten statistischen Strömung entspricht, Kennzeichnen des Datenpakets mit einer Überlastungsmitteilung; oder
nach Hinzufügen des Datenpakets, das der isolierten statistischen Strömung entspricht, zu der überlasteten Strömung isolierten Warteschlange, die der isolierten statistischen Strömung entspricht, als Antwort auf Ausrufen des Datenpakets in der überlasteten Strömung isolierten Warteschlange Kennzeichnen des Datenpakets mit der Überlastungsmitteilung.

4. Das Warteschlangenüberlastungsteuerungsverfahren nach einem der Ansprüche 1 bis 3, wobei die statistischen Datenpaketinformationen statistische Datenpaket-Teilinformationen umfassen, die unterschiedlichen Eingangsports entsprechen; nach Auswählen (S103) der statistischen Strömung, die die Überlastungsisolierungssteuerungsbedingung erfüllt, aus den statistischen Strömungen als die isolierte statistische Strömung, das Verfahren weiter Folgendes umfasst:
Auswählen (S501) eines Eingabeports aus den unterschiedlichen Eingabeports als einen virtuellen Isolationssteuerungsport gemäß den statistischen Datenpaket-Teilinformationen der statistischen Strömung, die der statistischen Isolationsströmung der unterschiedlichen Eingabeports entspricht, und Konfigurieren einer virtuellen überlasteten Strömung isolierten Warteschlange für den virtuellen Isolationssteuerungsport;
als Antwort auf Erkennen, dass eine Anzahl von Datenpaketen, die der virtuellen überlasteten Strömung isolierten Warteschlange entsprechen, die von dem Eingabeport empfangen werden, einen voreingestellten Strömungssteuerungsschwellenwert erreicht, Senden (S502) einer Strömungssteuerungsanfrage stromaufwärts von dem virtuellen Isolationssteuerungsport.

5. Das Warteschlangenüberlastungsteuerungsverfahren nach Anspruch 4, wobei die statistischen Datenpaket-Teilinformationen mindestens eines von einer Teil-Gesamtanzahl von Paketen und einer Teil-Gesamtlänge von Paketen in Bytes, die dem Eingabeport entsprechen, umfassen, wobei die Teil-Gesamtanzahl von Paketen konfiguriert ist, eine Gesamtanzahl von Datenpaketen von dem Eingabeport aufzuzeichnen, und die Teil-Gesamtlänge von Paketen in Bytes konfiguriert ist, eine Gesamt-Bytelänge von Datenpaketen von dem Eingabeport aufzuzeichnen.

6. Das Warteschlangenüberlastungsteuerungsverfahren nach einem der Ansprüche 1 bis 5, wobei nach Hinzufügen des Datenpakets, das der isolierten statistischen Strömung entspricht, zu der überlasteten Strömung isolierten Warteschlange, die der isolierten statistischen Strömung entspricht, das Verfahren weiter eines von Folgendem umfasst:
als Antwort auf regelmäßiges Erkennen, dass eine gegenwärtige Warteschlangenlänge der überlasteten Strömung isolierten Warteschlange geringer ist als ein erster Schwellenwert für Isolationsfreigabelänge, Rückgewinnen der überlasteten Strömung isolierten Warteschlange; und
als Antwort auf Erkennen, dass die gegenwärtige Warteschlangenlänge der überlasteten Strömung isolierten Warteschlange geringer ist als ein zweiter Schwellenwert für Isolationsfreigabelänge innerhalb einer voreingestellten Zeitperiode, Rückgewinnen der überlasteten Strömung isolierten Warteschlange.

7. Das Warteschlangenüberlastungsteuerungsverfahren nach einem der Ansprüche 1 bis 6, wobei:
nach Auswählen der statistischen Strömung, die die Überlastungsisolierungssteuerungsbedingung erfüllt, aus den statistischen Strömungen als die isolierte statistische Strömung, das Verfahren weiter Folgendes umfasst: Löschung der statistischen Strömungen oder Löschung der statistischen Datenpaketinformationen der statistischen Strömungen.

8. Das Warteschlangenüberlastungsteuerungsverfahren nach einem der Ansprüche 1 bis 7, wobei Zählen der Datenpakete, die jeder der statistischen Strömungen in der Strömungstabelle entsprechen, eines von Folgendem umfasst:
Kopieren aller Datenpakete in einer entsprechenden Ausgabewarteschlange jeder der statistischen Strömungen und Zählen der kopierten Datenpakete;
Probenahme und Kopieren von Datenpaketen in einer entsprechenden Ausgabewarteschlange jeder der statistischen Strömungen und Zählen der als Probe entnommenen und kopierten Datenpakete.

9. Das Warteschlangenüberlastungsteuerungsverfahren nach Anspruch 1, wobei die Schlüsselwortinformationen Folgendes umfassen: eine Quellen-IP, eine Ziel-IP, eine Portnummer der Quellenübertragung, eine Portnummer der Zielübertragung und einen Protokolltyp.

10. Eine Kommunikationsvorrichtung, umfassend einen Prozessor (1301), einen Speicher (1302) und einen Kommunikationsbus (1303), wobei
der Kommunikationsbus (1303) konfiguriert ist, den Prozessor (1301) und den Speicher (1302) zu verbinden;
der Prozessor (1301) konfiguriert ist, ein Computerprogramm auszuführen, das in dem Speicher (1302) gespeichert ist, um das Warteschlangenüberlastungsteuerungsverfahren nach einem der Ansprüche 1 bis 9 zu implementieren.

11. Ein Computerlesbares Speichermedium, wobei das computerlesbare Speichermedium ein oder mehrere Computerprogramme speichert, die, wenn sie von einem oder mehreren Prozessoren ausgeführt werden, bewirken, dass der eine oder die mehreren Prozessoren das Warteschlangenüberlastungsteuerungsverfahren nach einem der Ansprüche 1 bis 9 implementieren.

## Revendications

1. Un procédé de commande de congestion de file d'attente, comprenant :
à la suite de la détection qu'une longueur de file d'attente actuelle d'une file d'attente de sortie sur un port de sortie est supérieure à un seuil de longueur de congestion, la configuration (S101) uniquement d'un flux statistique dans une table de flux pour la file d'attente de sortie, dans lequel le flux statistique comprend des informations statistiques de paquets de données et un flux statistique dans la table de flux correspond à une file d'attente de sortie d'un port de sortie ;
le comptage (S102) de paquets de données correspondant à chacun de flux statistiques dans la table de flux, et la mise à jour des informations statistiques de paquets de données de chacun des flux statistiques selon un résultat de comptage ;
la sélection (S103) d'un flux statistique remplissant une condition de commande d'isolation de congestion parmi les flux statistiques en tant que flux statistique isolé, selon les informations statistiques de paquets de données de chacun des flux statistiques ;
l'ajout (S104) de paquets de données à une file d'attente isolée de flux congestionné, les paquets de données correspondant au flux statistique isolé, et la file d'attente isolée de flux congestionné correspondant au flux statistique isolé ; dans lequel
à la suite de la détection que la longueur de file d'attente actuelle de la file d'attente de sortie sur le port de sortie est supérieure au seuil de longueur de congestion, la configuration (S101) uniquement du flux statistique comprenant les informations statistiques de paquets de données dans la table de flux pour la file d'attente de sortie comprend :
à la suite de la détection que la longueur de file d'attente actuelle de la file d'attente de sortie sur le port de sortie est supérieure au seuil de longueur de congestion et qu'il n'y a pas de flux statistique correspondant de manière unique à la file d'attente de sortie dans la table de flux, l'extraction (S301) d'informations de mot-clé en tant qu'identifiant unique du flux statistique à partir d'un paquet de données de la file d'attente de sortie ; et
la configuration (S302) d'un flux statistique comprenant les informations statistiques de paquets de données dans la table de flux pour la file d'attente de sortie, et la configuration uniquement d'un index du flux statistique selon les informations de mot-clé ; et
la mise à jour des informations statistique de paquets de données de chacun des flux statistiques selon le résultat de comptage comprend :
la détermination d'un flux statistique correspondant au paquet de données selon les informations de mot-clé dans le paquet de données, et la mise à jour des informations statistiques de paquets de données dans le flux statistique correspondant au paquet de données selon le paquet de données ;
**caractérisé en ce que**
les informations statistiques de paquets de données comprennent au moins l'un d'un nombre total de paquets et d'une longueur totale de paquets en octets ; dans lequel les informations statistiques de paquets de données comprennent le nombre total de paquets, et la condition de commande d'isolation de congestion comprend un nombre total maximum de paquets ; ou, les informations statistiques de paquets de données comprennent le nombre total de paquets et la longueur totale de paquets en octets, et la condition de commande d'isolation de congestion comprend : une valeur intégrée maximale obtenue en combinant le nombre total de paquets et la longueur totale de paquets en octets ; et
avant la sélection du flux statistique remplissant la condition de commande d'isolation de congestion parmi les flux statistiques en tant que flux statistique isolé, selon les informations statistiques de paquets de données de chacun des flux statistiques, le procédé comprend en outre la détermination d'au moins l'un des:
si un nombre total de paquets de données actuellement comptés est supérieur ou égal à un seuil prédéfini pour un nombre total de paquets de données ;
si une valeur de synchronisation actuelle est supérieure ou égale à une valeur d'intervalle de temps prédéfinie.

2. Le procédé de commande de congestion de file d'attente selon la revendication 1, dans lequel la mise à jour des informations statistiques de paquets de données de chacun des flux statistiques selon le résultat du comptage comprend :
dans le cas où les informations statistiques de paquets de données comprennent le nombre total de paquets, à la suite de la réception d'un paquet de données, l'augmentation du nombre total de paquets de 1 ;
dans un cas où les informations statistiques de paquets de données comprennent la longueur totale de paquets en octets, à la suite de la réception d'un paquet de données, l'obtention d'une longueur d'octets du paquet de données reçu et l'ajout de la longueur d'octets du paquet de données reçu à la longueur totale de paquets en octets pour obtenir une longueur totale mise à jour de paquets en octets.

3. Le procédé de commande de congestion de file d'attente selon l'une quelconque des revendications 1 à 2, comprenant en outre
à la suite de l'ajout du paquet de données correspondant au flux statistique isolé à la file d'attente isolée de flux congestionné correspondant au flux statistique isolé, le marquage du paquet de données avec une notification de congestion ; ou,
après l'ajout du paquet de données correspondant au flux statistique isolé à la file d'attente isolée de flux congestionné correspondant au flux statistique isolé, à la suite de l'appel du paquet de données dans la file d'attente isolée de flux congestionné, le marquage du paquet de données avec la notification de congestion.

4. Le procédé de commande de congestion de file d'attente selon l'une quelconque des revendications 1 à 3, dans lequel les informations statistiques de paquets de données comprennent des sous-informations statistiques de paquet de données correspondant à différents ports d'entrée ; après la sélection (S103) du flux statistique remplissant la condition de commande d'isolation de congestion parmi les flux statistiques en tant que flux statistique isolé, le procédé comprend en outre :
la sélection (S501) d'un port d'entrée parmi les différents ports d'entrée en tant que port de commande d'isolation virtuel, selon les sous-informations statistiques de paquets de données du flux statistique correspondant au flux statistique d'isolation sur les différents ports d'entrée et la configuration d'une file d'attente isolée de flux congestionné virtuel pour le port de commande d'isolation virtuel ;
à la suite de la détection qu'un nombre de paquets de données correspondant à la file d'attente isolée de flux congestionné virtuel reçu par le port d'entrée atteint un seuil de commande de flux prédéfini, l'envoi (S502) d'une demande de commande de flux à un amont du port de commande d'isolation virtuel.

5. Le procédé de commande de congestion de file d'attente selon la revendication 4, dans lequel les sous-informations statistiques de paquet de données comprennent au moins l'un d'un nombre sous-total de paquets et d'une longueur sous-totale de paquets en octets correspondant au port d'entrée, le nombre sous-total de paquets est configuré pour enregistrer un nombre total de paquets de données provenant du port d'entrée, et la longueur sous-totale de paquets en octets est configurée pour enregistrer une longueur d'octets totale de paquets de données provenant du port d'entrée.

6. Le procédé de commande de congestion de file d'attente selon l'une quelconque des revendications 1 à 5, dans lequel après l'ajout du paquet de données correspondant au flux statistique isolé à la file d'attente isolée de flux congestionné correspondant au flux statistique isolé, le procédé comprend en outre l'une quelconque :
à la suite de la détection périodique qu'une longueur de file d'attente actuelle de la file d'attente isolée de flux congestionné est inférieure à un premier seuil de longueur de libération d'isolation, d'une récupération de la file d'attente isolée de flux congestionné ; et
à la suite de la détection qu'une longueur de file d'attente actuelle de la file d'attente isolée de flux congestionné est inférieure à un second seuil de longueur de libération d'isolation pendant une période de temps prédéfinie, d'une récupération de la file d'attente isolée de flux congestionné.

7. Le procédé de commande de congestion de file d'attente selon l'une quelconque des revendications 1 à 6, dans lequel :
après la sélection du flux statistique remplissant la condition de commande d'isolation de congestion parmi les flux statistiques en tant que flux statistique isolé, le procédé comprend en outre : l'effacement des flux statistiques, ou l'effacement des informations statistiques de paquets de données des flux statistiques.

8. Le procédé de commande de congestion de file d'attente selon l'une quelconque des revendications 1 à 7, dans lequel le comptage des paquets de données correspondant à chacun des flux statistiques dans la table de flux comprend l'un quelconque :
d'une copie de tous les paquets de données dans une file d'attente de sortie correspondante de chacun des flux statistiques, et le comptage es paquets de données copiés ;
d'un échantillonnage et de la copie de paquets de données dans une file d'attente de sortie correspondante de chacun des flux statistiques, et le comptage des paquets de données échantillonnés et copiés ;

9. Le procédé de commande de congestion de file d'attente selon la revendication 1, dans lequel les informations de mot-clé comprennent : une IP de source, une IP de destination, un numéro de port de transmission de source, un numéro de port de transmission de destination et un type de protocole.

10. Un dispositif de communication, comprenant un processeur (1301), une mémoire (1302) et un bus de communication (1303), dans lequel
le bus de communication (1303) est configuré pour raccorder le processeur (1301) et la mémoire (1302) ;
le processeur (1301) est configuré pour exécuter un programme informatique stocké dans la mémoire (1302) pour mettre en oeuvre le procédé de commande de congestion de file d'attente selon l'une quelconque des revendications 1 à 9.

11. Un support de stockage lisible par ordinateur, dans lequel le support de stockage lisible par ordinateur stocke un ou plusieurs programmes informatiques qui, lorsqu'ils sont exécutés par un ou plusieurs processeurs, amènent les un ou plusieurs processeurs à mettre en oeuvre le procédé de commande de congestion de file d'attente selon l'une quelconque des revendications 1 à 9.
